# EUROPÄISCHE PATENTSCHRIFT

(11) **EP 1 535 940 B1**
(45) Veröffentlichungstag und Bekanntmachung des Hinweises auf die Patenterteilung: **13.06.2007**
(21) Anmeldenummer: 04027418.5
(22) Anmeldetag: 18.11.2004
(51) Int. Cl.: C08G 18/71, C08G 18/22

(54) **Verfahren zur Herstellung von organyloxysilylterminierten Polymeren**
Process for the preparation of organyloxysilylterminated polymers
Procédé pour la préparation de polymères ayant comme groups terminaux organyloxysilyle.

(30) Priorität: 27.11.2003 DE 10355318
(43) Veröffentlichungstag der Anmeldung: 01.06.2005
(73) Patentinhaber: Wacker Chemie AG, 81737 München (DE)
(72) Erfinder: Ziche, Wolfgang, Dr., 01665 Diera-Zehren (DE); Schindler, Wolfram, Dr., 84577 Tüssling (DE)
(74) Vertreter: Budczinski, Angelika

(56) Entgegenhaltungen:
- EP-A2- 0 372 561
- WO-A1-98/28642

## Beschreibung

Die Erfindung betrifft ein Verfahren zur Herstellung von organyloxysilylterminierten Polymeren, die gegenüber Luftfeuchtigkeit erhöhte Stabilität aufweisen, und solche Polymere enthaltenden vernetzbaren Massen.

Feuchtigkeitsvernetzbare Zubereitungen sind allgemein bekannt, besonders solche, die auf silylfunktionalisierten Polymeren basieren. Unter diesen wiederum sind diejenigen mit terminalen Alkoxysilylgruppen bevorzugt, da die Spaltprodukte nicht korrosiv und toxikologisch unbedenklich sind. Die silylfunktionalisierten Polymere werden nach bekannten Methoden hergestellt. Bekannt ist so z.B. die Umsetzung von Polymeren, die Endgruppen mit aktivem Wasserstoff besitzen, mit Isocyanaten, besonders Isocyanatoalkyl-alkoxysilanen. Die Reaktion kann mit oder ohne die Isocyanatreaktion fördernden Katalysatoren durchgeführt werden. In EP 931 800 A wird die Herstellung silanfunktioneller Polyurethane aus hydroxyfunktionellen Präpolymeren und z.B. I-socyanatopropyltrimethoxysilan unter wasserfreien Bedingungen und bevorzugt unter einer Inertgasatmosphäre beschrieben, um eine vorzeitige Hydrolyse der Alkoxysilangruppen zu verhindern. In EP 372 561 A wird die Herstellung eines silanvernetzbaren Polyethers beschrieben, der unter Feuchtigkeitsausschluss gelagert werden muss, da er mit oder ohne Silankondensations-Katalysator vulkanisiert. Dass diese Vorsichtsmaßnahme unabhängig vom Herstellungsverfahren des silanvernetzbaren Polyethers ist, kann EP 397 036 A entnommen werden: hier wird ein Polyether erst mit z.B. Allylendgruppen versehen und dann bevorzugt mit Alkoxyhydridosilanen umgesetzt. Auch hier wird beschrieben, dass auch ohne einen Silan-Kondensationskatalysator vorzeitige Vulkanisation erfolgt.

Bekannt sind als Silan-Kondensationskatalysatoren zahlreiche Verbindungen, wie z.B. Dialkylzinn(IV)verbindungen, wie Dibutylzinndilaurat, diverse Metallkomplexverbindungen (Chelate und Carboxylate), z.B. des Titans, Bismuths, Zirkoniums, Amine und deren Salze und andere bekannte saure und basische Katalysatoren. Hierzu sei beispielsweise auf EP-A 673 972 und EP-A 538 880 verwiesen. Bekannt als Katalysatoren, welche die Isocyanatreaktion mit Hydroxylgruppen fördern, sind oft solche, die auch die Silankondensation fördern, wie z.B. Dialkylzinn(IV)-verbindungen und Metallkomplexverbindungen (Chelate und Carboxylate) des Bismuths und Zinks oder tertiäre Aminverbindungen.

Der Nachteil aller bekannten Verfahren zur Herstellung silanvernetzbarer Polymere ist deshalb, dass die Handhabung der Polymeren i.a. unter Ausschluss von Luftfeuchtigkeit geschehen muss. In der betrieblichen Praxis ist das aber nur mit hohem und deshalb kostspieligem Aufwand verbunden.

Gegenstand der vorliegenden Erfindung ist ein Verfahren zur Herstellung vernetzbarer Massen, dadurch gekennzeichnet, dass in einem ersten Schritt
α,ω-dihydroxyterminierte organische Polymere der Formel

OH-A-OH (II)

mit Isocyanato-funktionellen Silanen der Formel

R²₃₋ₙ(OR¹)ₙSi-R-NCO (III)

in Anwesenheit von Katalysatoren, ausgewählt aus der Gruppe bestehend aus Bismuth- und Zinkverbindungen, zu organyloxysilylterminierten Polymeren umgesetzt werden,
wobei
R zweiwertige, gegebenenfalls substituierte Kohlenwasserstoffreste mit 1 bis 12 Kohlenstoffatomen bedeutet, die mit Heteroatomen unterbrochen sein können,
R¹ gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet,
R² gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet,
A einen zweiwertigen, gegebenenfalls substituierten Kohlenwasserstoffrest mit mindestens 6 Kohlenstoffatomen bedeutet, der mit Heteroatomen unterbrochen sein kann, und
n gleich 1, 2 oder 3 ist,
und in einem zweiten Schritt
die im ersten Schritt erhaltenen Polymere (A) mit Silan-Kondensationskatalysator (B) ausgewählt aus der Gruppe bestehend aus Dibutylzinndilaurat, Dibutylzinndiacetat, Tetrabutyldimethoxydistannoxan, Lösungen von Dibutylzinnoxid in Methyltrimethoxysilan oder Tetraethoxysilan, Dioctylzinndilaurat, Dioctylzinndiacetat, Tetraoctyldimethoxydistannoxan, Lösungen von Dioctylzinnoxid in Methyltrimethoxysilan oder Tetraethoxysilan, Dibutylzinn-bis(2,4-pentandionat), Dibutylzinnmaleat, Aminopropyltrimethoxysilan und Aminoethylaminopropyltrimethoxysilan sowie saure Katalysatoren, wie organische Carbonsäuren, Phosphorsäuren bzw. Phosphorsäuerester, Säurechloride oder Hydrochloride, sowie gegebenenfalls weiteren Stoffen (C) vermischt werden.

Beispiele für zweiwertige Reste R sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste; Arylenreste, wie der Phenylen- und der Naphthylenrest; Alkarylenreste, wie o-, m-, p-Tolylenreste, Xylylenreste und Ethylphenylenreste; Aralkylenreste, wie der Benzylenrest, der α- und der β-Phenylethylenrest.

Bevorzugt handelt es sich bei Rest R um zweiwertige Kohlenwasserstoffreste mit 1 bis 6 Kohlenstoffatomen, besonders bevorzugt um zweiwertige Kohlenwasserstoffreste mit 1 bis 3 Kohlenstoffatomen, insbesondere um den Methylenrest.

Beispiele für Rest R¹ und R² sind jeweils unabhängig voneinander Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R¹ sind Alkoxyalkylreste, wie z.B. Ethoxy- und Methoxyethylreste.

Bevorzugt handelt es sich bei Rest R¹ und R² jeweils unabhängig voneinander um einen Kohlenwasserstoffrest mit 1 bis 6 Kohlenstoffatomen, besonders bevorzugt um einen Alkylrest mit 1 bis 4 Kohlenstoffatomen, insbesondere um den Methylrest.

Beispiele für Rest A sind zweiwertige Polymerreste, wie Polyetherreste der allgemeinen Formel -(R³O)ₘ-, wobei R³ gleich oder verschieden sein kann und gegebenenfalls substituierte Kohlenwasserstoffreste, bevorzugt Methylen-, Ethylen- und 1,2-Propylenreste, bedeutet und m gleich einer ganzen Zahl von 7 bis 600, bevorzugt 70 bis 400, ist (wie z.B. solche käuflich erhältlich unter der Bezeichnung "Acclaim 12200" von Bayer AG, Deutschland, "Alcupol 12041LM" von Repsol, Spanien und "Poly L 220-10" von Arch Chemicals, USA), Polyesterreste, Polycarbonatreste, Polyestercarbonatreste (z.B. solche käuflich erhältlich unter der Bezeichnung "Desmophen 1700" und "Desmophen C-200" von Bayer AG, Deutschland), Polybutenylenreste und Polybutadienylenreste (z.B. solche käuflich erhältlich unter der Bezeichnung "Poly bd^{®} R-45 HTLO" von der Fa. Sartomer Co., Inc., USA oder "Kraton^{™} Liquid L-2203" von der Fa. Kraton Polymers US L.L.C.), Polyurethanreste und Polyharnstoffreste.

Bevorzugt hat n den Wert 2 oder 3.

Bevorzugt handelt es sich bei den erfindungsgemäß eingesetzten organischen Polymeren der Formel (II) um Polymerzubereitungen, die auf Polyethern und Polyurethanen basieren, besonders bevorzugt sind solche, die auf Polyethern basieren, davon wiederum speziell 1,2-Polypropylenglykole mit Molekulargewichten bevorzugt größer als 4000, besonders bevorzugt 4000 bis 20000 (nomi nelles Molekulargewicht).

Bevorzugt haben die erfindungsgemäß eingesetzten organischen Polymere der Formel (II) bei 23°C eine Viskosität von 10 bis 1 000 000 mPas, besonders bevorzugt von 1000 bis 300 000 mPas.

Die erfindungsgemäß eingesetzten Polymere der Formel (II) sind handelsübliche Produkte bzw. können nach in der Polymerchemie gängigen Verfahren hergestellt werden.

Beispiele für Silane der Formel (III) sind Isocyanato-methyl-dimethylmethoxysilan, Isocyanato-propyl-dimethylmethoxysilan, Isocyanato-methyl-methyldimethoxysilan, Isocyanato-propyl-methyldimethoxysilan, Isocyanato-methyl-trimethoxysilan und Isocyanato-propyl-trimethoxysilan, wobei Isocyanato-methyl-methyldimethoxysilan, Isocyanato-propyl-methyldimethoxysilan, Isocyanato-methyl-trimethoxysilan und Isocyanato-propyl-trimethoxysilan bevorzugt und Isocyanato-methyl-methyldimethoxysilan und Isocyanato-propyl-methyldimethoxysilan besonders bevorzugt sind.

Die erfindungsgemäß eingesetzten Silane der Formel (III) sind handelsübliche Produkte bzw. können nach in der Siliciumchemie gängigen Verfahren hergestellt werden.

Im erfindungsgemäßen Verfahren werden Silane der Formel (III) in Mengen eingesetzt, dass das molare Verhältnis von Resten Si-R-NCO zu Hydroxylresten in Polymeren der Formel (II) bevorzugt 0,75 bis 1,25, besonders bevorzugt 0,9 bis 1,1, ist.

Beispiele für die erfindungsgemäß im ersten Schritt eingesetzten Katalysatoren sind Zinkacetylacetonat, Bismuth-(2-ethylhexanoat), Bismuth-neodecanoat, Zink-2-ethylhexanoat, Zink-neodecanoat und Bismuth-tetramethylheptandionat. Beispiele für kommerziell erhältliche Katalysatoren sind Borchi^{®} Kat 22, Borchi^{®} Kat VP 0243, Borchi^{®} Kat VP 0244 (Borchers GmbH), die BICAT^{®} -Typen (The Shepherd Chemical Company, USA) und K-Kat^{®} K-348 (KING INDUSTRIES, INC., USA).

Bevorzugt handelt es sich bei dem im ersten Schritt erfindungsgemäß eingesetzten Katalysator um Carboxylate des Bismuths und Zinks, wobei Bismuth-(2-ethylhexanoat), Bismuth-neodecanoat, Zink-2-ethylhexanoat und Zink-neodecanoat, bzw. deren Mischungen besonders bevorzugt sind.

Im ersten Schritt des erfindungsgemäßen Verfahrens werden Katalysatoren in Mengen von bevorzugt 0,001 bis 1,0 Gewichtsteilen, besonders bevorzugt 0,01 bis 0,5 Gewichtsteilen, jeweils bezogen auf 100 Gewichtsteile des Isocyanatosilans der Formel (III), eingesetzt.

Der erste Schritt des erfindungsgemäßen Verfahrens wird bei Temperaturen von bevorzugt 0 bis 150°C, besonders bevorzugt bei 30 bis 100°C und einem Druck der umgebenden Atmosphäre, also etwa 900 bis 1100 hPa, durchgeführt.

Der erste Schritt des erfindungsgemäßen Verfahrens kann sowohl kontinuierlich als auch diskontinuierlich durchgeführt werden.

Der erste Schritt des erfindungsgemäßen Verfahrens hat den Vorteil, dass es schnell und einfach in der Durchführung ist, wobei leicht verfügbare Rohstoffe als Edukte eingesetzt werden.

Überraschenderweise wurde gefunden, dass die nach dem erfindungsgemäßen Verfahren hergestellten organyloxygruppenterminierten Polymere stabil gegenüber Luftfeuchtigkeit sind und keine Katalysatordesaktivierung nötig, was die Handhabung bei der weiteren Verarbeitung erheblich erleichtert.

Ein weiterer Vorteil des erfindungsgemäßen Verfahrens ist, dass die hergestellten Polymere direkt weiterverwendet werden können, z.B. bei der Herstellung von vernetzbaren Massen.

Die erfindungsgemäß hergestellten organyloxysilylterminierten Polymere können überall dort eingesetzt werden, wo auch bisher organyloxysilylterminierte Polymere eingesetzt wurden.

Insbesondere eignen sie sich zur Verwendung in vernetzbaren Massen.

Beispiele für Silan-Kondensationskatalysatoren (B), die eine Vulkanisation der organyloxysilylterminierten Polymere unter Einfluss von Luftfeuchtigkeit bewirken, sind Dibutylzinndilaurat, Dibutylzinndiacetat, Tetrabutyldimethoxydistannoxan, Lösungen von Dibutylzinnoxid in Methyltrimethoxysilan oder Tetraethoxysilan, Dioctylzinndilaurat, Dioctylzinndiacetat, Tetraoctyldimethoxydistannoxan, Lösungen von Dioctylzinnoxid in Methyltrimethoxysilan oder Tetraethoxysilan, Dibutylzinn-bis(2,4-pentandionat), Dibutylzinnmaleat, Aminopropyltrimethoxysilan und Aminoethylaminopropyltrimethoxysilan sowie saure Katalysatoren, wie organische Carbonsäuren, wie z.B. Propionsäure und Essigsäure, Phosphorsäuren bzw. Phosphorsäuerester, Säurechloride oder Hydrochloride.
Bevorzugt handelt es sich bei den Silan-Katalysatoren (B) um Dialkylzinndiacylate, Amine und Phosphorsäureester, besonders bevorzugt sind Mono- und Dialkylphosphorsäureester und Aminoalkylsilane.

Im zweiten Schritt des erfindungsgemäßen Verfahren zur Herstellung von vernetzbaren Massen wird Silan-Katalysator (B) in Mengen von bevorzugt 0,01 bis 3,0 Gewichtsteilen, besonders bevorzugt 0,1 bis 1,0 Gewichtsteilen, jeweils bezogen auf 100 Gewichtsteile Polymer (A) eingesetzt .

Als gegebenenfalls eingesetzte weitere Stoffe (C) können alle Komponenten eingesetzt werden, die auch bisher in vernetzbaren Massen eingesetzt worden sind, wobei es sich bevorzugt um Füllstoffe, Additive, wie z.B. Haftvermittler, UV-Stabilisatoren, Antioxidationsmittel, Pigmente und Trocknungsmittel, Vernetzer, wie Alkoxysilane, Weichmacher, wie z.B. Phthalate, Polyether und Polybutene, besonders bevorzugt Haftvermittler, Füllstoffe und Weichmacher handeln kann.

Beispiele für gegebenenfalls eingesetzte Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststofffasern.

Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Bei alleiniger Verwendung von verstärkender Kieselsäure als Füllstoff können transparente RTV-Massen hergestellt werden.

Falls im zweiten Schritt des erfindungsgemäßen Verfahrens zur Herstellung von vernetzbaren Massen Füllstoff eingesetzt wird, handelt es sich um Mengen von bevorzugt 1,0 bis 50,0 Gewichtsteilen, besonders bevorzugt 5 bis 30 Gewichtsteilen, jeweils bezogen auf 100 Gewichtsteile Polymer (A).

Beispiele für gegebenenfalls eingesetzte Additive sind Haftvermittler, wie Aminopropyltrimethoxysilan und Aminoethylaminopropyltriethoxysilan, UV-Stabilisatoren und Antioxidationsmittel, wie z.B. solche käuflich erhältlich unter der Bezeichnung Tinuvin® 292, Tinuvin® 327 und Tinuvin® 770 bei Ciba Spezialitätenchemie Lampertsheim GmbH, Pigmente, wie Eisenoxid, und Trocknungsmittel, wie Kohlensäuretrimethylester, Vinyltrimethoxysilan und N-Trimethoxysilyl-O-methyl-carbamat.

Falls im zweiten Schritt des erfindungsgemäßen Verfahrens zur Herstellung von vernetzbaren Massen Additive eingesetzt werden, handelt es sich um Mengen von bevorzugt 1 bis 200 Gewichtsteilen, besonders bevorzugt 10 bis 100 Gewichtsteilen, jeweils bezogen auf 100 Gewichtsteile Polymer (A).

Beispiele für gegebenenfalls eingesetzte Vernetzer sind Verbindungen mit mindestens drei hydrolysierbaren Gruppen, wie Acetoxy-, Oximato- und Organyloxygruppen, wie Ethoxyreste, Alkoxyethoxyreste und Methoxyreste, wobei es sich bevorzugt um Verbindungen mit Organyloxygruppen handelt.
Falls im zweiten Schritt des erfindungsgemäßen Verfahrens Vernetzer eingesetzt werden, handelt es sich bevorzugt um Alkoxysilane, wie Vinyltrimethoxysilan, Methyltrimethoxysilan, Propyltrimethoxysilan, N-Trimethoxysilyl-O-methyl-carbamat und N-Dimethoxy(methyl)silyl-O-methyl-carbamat und/oder deren Teilhydrolysate, wobei Vinyltrimethoxysilan und N-Trimethoxysilyl-O-methyl-carbamat besonders bevorzugt sind.

Falls im zweiten Schritt des erfindungsgemäßen Verfahrens zur Herstellung von vernetzbaren Massen Vernetzer eingesetzt werden, handelt es sich um Mengen von bevorzugt 0,1 bis 10 Gewichtsteilen, besonders bevorzugt 1 bis 5 Gewichtsteilen, jeweils bezogen auf 100 Gewichtsteile Polymer (A).

Beispiele für gegebenenfalls eingesetzte Weichmacher sind Phthalate, Polyether und Polybutene, wobei Phthalate und Polyether bevorzugt sind.

Falls im zweiten Schritt des erfindungsgemäßen Verfahrens zur Herstellung von vernetzbaren Massen Weichmacher eingesetzt werden, handelt es sich um Mengen von bevorzugt 1 bis 200 Gewichtsteilen, besonders bevorzugt 10 bis 100 Gewichtsteilen, jeweils bezogen auf 100 Gewichtsteile Polymer (A).

Bei den im zweiten Schritt des erfindungsgemäßen Verfahrens eingesetzten Komponenten kann es sich jeweils um eine Art einer solchen Komponente wie auch um ein Gemisch aus mindestens zwei Arten einer jeweiligen Komponente handeln.

Beim zweiten Schritt des erfindungsgemäßen Verfahrens zur Herstellung von vernetzbaren Massen können die einzelnen Komponenten in beliebiger Reihenfolge miteinander vermischt werden; dies erfolgt mit Apparaturen die dem Fachmann für diesen Zweck bekannt sind, wie z.B. Dissolver, Planetendissolver, Planetenmischer und Zweischneckenkneter.

Der zweite Schritt des erfindungsgemäßen Verfahrens muss unter weitgehendem Ausschluss von Luftfeuchtigkeit durchgeführt werden, sobald Silan-Katalysator (B) anwesend ist.

Der zweite Schritt des erfindungsgemäßen Verfahrens wird bei Temperaturen von bevorzugt 10 bis 100°C, besonders bevorzugt bei 20 bis 70°C, und einem Druck der umgebenden Atmosphäre, also etwa 900 bis 1100 hPa, durchgeführt.

Der zweite Schritt des erfindungsgemäßen Verfahrens kann sowohl kontinuierlich als auch diskontinuierlich durchgeführt werden.

Die einzelnen Schritte des erfindungsgemäßen Verfahrens können separat oder als sog. Eintopfreaktion in einem Reaktionsgefäß durchgeführt werden.

Das erfindungsgemäße Verfahren hat den Vorteil, dass die Herstellung des feuchtigkeitsvernetzbaren Polymers im ersten Schritt keinen Ausschluss von Luftfeuchtigkeit erfordert. Das gilt auch für die weitere Handhabung des Polymers bis zu dem Zeitpunkt, an dem ein Silan-Kondensationskatalysator im zweiten erfindungsgemäßen Schritt zugesetzt wird. Für den Anwender ist deshalb eine vereinfachte Lagerhaltung auch angebrochener Gebinde leicht möglich.

Ein besonderer Vorteil des erfindungsgemäßen Verfahrens ist, dass es als Eintopfreaktion (oder sukzessive Reaktion im Falle der kontinuierlichen Produktion) geführt werden kann, da keinerlei Deaktivierung irgendwelcher Zusätze oder eine Aufbereitung des hergestellten silylfunktionellen Polymers nach einem der Teilschritte nötig ist.

Die erfindungsgemäß hergestellten, vernetzbaren Massen können für alle Zwecke eingesetzt werden, für die auch bisher durch Kondensations/Hydrolysereaktion bei Raumtemperatur vernetzbare Massen eingesetzt worden sind. Sie eignen sich somit ausgezeichnet beispielsweise als Abdichtungsmassen für Fugen, einschließlich senkrecht verlaufender Fugen, und ähnlichen Leerräumen, z.B. von Gebäuden, Land-, Wasser- und Luftfahrzeugen, oder als Klebstoffe oder Verkittungsmassen, z.B. im Fensterbau oder bei der Herstellung von Vitrinen, sowie zur Herstellung von Schutzüberzügen oder von gummielastischen Formkörpern sowie für die Isolierung von elektrischen oder elektronischen Vorrichtungen. Insbesondere geeignet sind die erfindungsgemäßen RTV-Massen als niedermodulige Abdichtungsmassen für Fugen mit möglicher hoher Bewegungsaufnahme.

Für die Vernetzung der erfindungsgemäß hergestellten Massen reicht der übliche Wassergehalt der Luft aus. Die Vernetzung kann bei Raumtemperatur oder, falls erwünscht, auch bei höheren oder niedrigeren Temperaturen, z.B. bei -5 bis 10°C oder bei 30 bis 50°C, durchgeführt werden. Die Vernetzung wird bevorzugt bei einem Druck der umgebenden Atmosphäre durchgeführt, also etwa 900 bis 1100 hPa.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

4 g Polypropylenglykol mit einer durchschnittlichen Molmasse Mₙ = 425 (käuflich erhältlich bei der Fa. von Sigma-Aldrich Chemie GmbH; 18,8 mmol terminale OH-Gruppen) werden mit einer Mischung aus 3 mg Bismuthneodecanoat (käuflich erhältlich von ABCR GmbH & Co. KG) und 2 mg Zink-2-ethylhexanoat (käuflich erhältlich von ABCR GmbH & Co. KG) gut vermischt. Separat werden 2,74 g Isocyanato-methyl-dimethylmethoxysilan abgewogen. Das Vermischen der Komponenten erfolgt kurz vor dem Beginn der ersten IR-Messung, die das Verschwinden der NCO-Bande bei 2150 cm⁻¹ verfolgt. Das fest verschlossene Probenfläschchen wird bei 50°C im Wasserbad temperiert. Alle 30 Minuten wird eine IR-Messung durchgeführt. Nach 2,0 Stunden ist die NCO-Bande nicht mehr zu sehen. Es werden 6,74 g eines Polypropylenglycols mit Dimethylmethoxysilylmethyl-Endgruppen und einer Viskosität von 90 mPa·s erhalten. Die ¹³C-NMR-Spektren zeigen die Abwesenheit unerwünschter Nebenprodukte, wie z.B. Isocyanurate.

### Vergleichsbeispiel 1

4 g Polypropylenglykol mit einer durchschnittlichen Molmasse Mₙ = 425 (käuflich erhältlich bei der Fa. von Sigma-Aldrich Chemie GmbH; 18,8 mmol terminale OH-Gruppen) werden mit 4 mg Dibutylzinndilaurat gut vermischt. Separat werden 2,74 g Isocyanato-methyl-dimethylmethoxysilan) abgewogen. Das Vermischen der Komponenten erfolgt kurz vor dem Beginn der ersten IR-Messung, die das Verschwinden der NCO-Bande bei 2150 cm⁻¹ verfolgt. Das fest verschlossene Probenfläschchen wird bei 50°C im Wasserbad temperiert. Alle 30 Minuten wird eine IR-Messung durchgeführt. Nach 2,0 Stunden ist die NCO-Bande nicht mehr zu sehen. Es werden 6,74 g eines Polypropylenglycols mit Dimethylmethoxysilylmethyl-Endgruppen und einer Viskosität von 90 mPa·s erhalten.

### Beispiel 2

1000 g Polypropylenglykol mit einer OH-Zahl von 10 mg KOH/g (käuflich erhältlich von der Bayer AG, Deutschland unter der Bezeichnung "Acclaim 12200") werden mit 38,4 g Isocyanato-methyl-trimethoxysilan (käuflich erhältlich unter der Marke GENIOSIL® XL 43 bei der Wacker-Chemie GmbH, Deutschland) und einer Mischung aus 0,08 g Bismuthneodecanoat (käuflich erhältlich von ABCR GmbH & Co. KG) und 0,02 g Zink-2-ethylhexanoat (käuflich erhältlich von ABCR GmbH & Co. KG) vermischt und bei 80°C innerhalb einer Stunde umgesetzt. Die Umsetzung wird mittels IR (NCO-Bande bei 2150 cm⁻¹) verfolgt. Es werden 1038 g eines Polypropylenglycols mit Trimethoxysilylmethyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1.

### Vergleichsbeispiel 2

Die in Beispiel 2 beschriebene Arbeitsweise wird wiederholt mit der Abänderung, dass anstelle von 0,1 g der in Beispiel 2 verwendeten Katalysatormischung 0,1 g Dibutylzinndilaurat eingesetzt wird. Es werden 1038 g eines Polypropylenglycols mit Trimethoxysilylmethyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1. Es ist deutlich zu sehen, dass die Viskosität unerwünscht zunimmt und das Polymer schließlich geliert und damit unbrauchbar wird.

### Beispiel 3

1000 g Polypropylenglykol mit einer OH-Zahl von 10 mg KOH/g (käuflich erhältlich von der Bayer AG, Deutschland unter der Bezeichnung "Acclaim 12200") werden mit 34,2 g Isocyanato-methyl-dimethoxymethylsilan (käuflich erhältlich unter der Marke GENIOSIL® XL 42 bei der Wacker-Chemie GmbH, Deutschland) und 0,1 g einer Mischung aus 0,08 g Bismuthneodecanoat (käuflich erhältlich von ABCR GmbH & Co. KG) und 0,02 g Zink-2-ethylhexanoat (käuflich erhältlich von ABCR GmbH & Co. KG) vermischt und bei 80°C innerhalb einer Stunde umgesetzt. Die Umsetzung wird mittels IR (NCO-Bande bei 2150 cm⁻¹) verfolgt. Es werden 1034 g eines Polypropylenglycols mit Methyldimethoxysilylmethyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1.

### Vergleichsbeispiel 3

Die in Beispiel 3 beschriebene Arbeitsweise wird wiederholt mit der Abänderung, dass anstelle von 0,1 g der in Beispiel 3 verwendeten Katalysatormischung 0,1 g Dibutylzinndilaurat eingesetzt wird. Es werden 1034 g eines Polypropylenglycols mit Methyldimethoxysilylmethyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1. Es ist deutlich zu sehen, dass die Viskosität unerwünscht zunimmt und das Polymer schließlich geliert und damit unbrauchbar wird.

### Beispiel 4

1000 g Polypropylenglykol mit einer OH-Zahl von 10 mg KOH/g (käuflich erhältlich von der Bayer AG, Deutschland unter der Bezeichnung "Acclaim 12200") werden mit 40,2 g Isocyanato-propyl-trimethoxysilan (käuflich erhältlich unter der Marke GENIOSIL® GF 40 bei der Wacker-Chemie GmbH, Deutschland) und 0,1 g Zinkacetylacetonat vermischt und bei 80°C innerhalb einer Stunde umgesetzt. Die Umsetzung wird mittels IR (NCO-Bande bei 2150 cm⁻¹) verfolgt. Es werden 1040 g eines Polypropylenglycols mit Trimethoxysilylpropyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1.

### Vergleichsbeispiel 4

Die in Beispiel 4 beschriebene Arbeitsweise wird wiederholt mit der Abänderung, dass anstelle von 0,1 g Zinkacetylacetonat 0,1 g Dibutylzinndilaurat eingesetzt wird. Es werden 1040 g eines Polypropylenglycols mit Trimethoxysilylpropyl-Endgruppen erhalten. Eine Probe wurde in runde Aluschalen abgefüllt (5 cm Durchmesser, Füllhöhe ca. 0,5 cm) und bei 23°C und 50 % rel. Luftfeuchtigkeit gelagert und anschließend die Viskosität bestimmt. Die Ergebnisse finden sich in Tabelle 1. Es ist deutlich zu sehen, dass die Viskosität unerwünscht zunimmt und das Polymer schließlich geliert und damit unbrauchbar wird.

**Tabelle 1**

| Viskosität nach Herstellung und Lagerung der Polymere an Luft (23°C / 50% rh) | | | |
|---|---|---|---|
| **Beispiele** | **2** | **3** | **4** |
| Viskosiät (mPas) nach Lagerung | | | |
| 0 Tage | 20900 | 10600 | 12500 |
| 1 Tag | 22000 | 10400 | 12700 |
| 2 Tage | 22700 | 11400 | 13000 |
| 5 Tage | 24400 | 12100 | 12900 |
| | | | |
| **Vergleichsbeispiele** | **V2** | **V3** | **V4** |
| Viskosität (mPas) nach Lagerung | | | |
| 0 Tage | 23400 | 9900 | 12000 |
| 1 Tag | geliert | geliert | geliert |
| 2 Tage | - | - | - |
| 5 Tage | - | - | - |

### Beispiel 5

29,5 g des gemäß Beispiel 2 hergestellten Polymers werden mit 5 g Diisooctylphthalat und 0,5 g Trimethoxysilylmethyl-carbaminsäuremethylester (käuflich erhältlich unter der Marke GENIOSIL^{®} XL 63 bei der Wacker-Chemie GmbH, Deutschland) gemischt und in einem schnelllaufenden Rührer (SpeedMixer DAC 150 FV der Fa. Hauschild, Deutschland) 4,5 g hydrophobe Kieselsäure mit einer BET-Oberfläche von 140 m²/g (käuflich erhältlich unter der Marke Wacker HDK^{®} H 2000 bei der Wacker-Chemie GmbH, Deutschland) und 29,5 g Kreide mit einer BET-Oberfläche von 4 m²/g (käuflich erhältlich unter der Bezeichnung "Omya BLR 3" bei der Fa. Omya GmbH) eingemischt. Anschließend werden 0,5 g Aminoproyltrimethoxysilan (käuflich erhältlich unter der Marke GENIOSIL^{®} GF 96 bei der Wacker-Chemie GmbH, Deutschland) als Haftvermittler und zugleich als Katalysator unter Ausschluss von Luftfeuchtigkeit zugegeben. Es wurde eine standfeste Masse erhalten.

Die so erhaltene Masse wird nun mit einer Rakel auf Polyethylenfolie in einer Dicke von 2 mm aufgetragen und bei 23°C und 50 % rel. Luftfeuchtigkeit vernetzen gelassen. Die Hautbildungszeit beträgt 2 Minuten.

### Beispiel 6

Die in Beispiel 5 beschriebene Arbeitsweise wird wiederholt mit der Abänderung, dass anstelle des in Beispiel 2 hergestellten Polymers die gleiche Menge an in Beispiel 3 hergestelltem Polymer eingesetzt wird.
Die Hautbildungszeit beträgt 15 Minuten.

### Beispiel 7

29,5 g des gemäß Beispiel 4 hergestellten Polymers werden mit 5 g Diisooctylphthalat und 0,5 g Trimethoxysilylmethyl-carbaminsäuremethylester (käuflich erhältlich unter der Marke GENIOSIL^{®} XL 63 bei der Wacker-Chemie GmbH, Deutschland) gemischt und in einem schnelllaufenden Rührer (SpeedMixer DAC 150 FV der Fa. Hauschild, Deutschland) 4,5 g hydrophobe Kieselsäure mit einer BET-Oberfläche von 140 m²/g (käuflich erhältlich unter der Marke Wacker HDK^{®} H 2000 bei der Wacker-Chemie GmbH, Deutschland) und 29,5 g Kreide mit einer BET-Oberfläche von 4 m²/g (käuflich erhältlich unter der Bezeichnung "Omya BLR 3" bei der Fa. Omya GmbH) eingemischt. Anschließend werden 0,5 g Aminoproyltrimethoxysilan (käuflich erhältlich unter der Marke GENIOSIL^{®} GF 96 bei der Wacker-Chemie GmbH, Deutschland) als Haftvermittler und zugleich als Katalysator unter Ausschluss von Luftfeuchtigkeit zugegeben. Es wurde eine standfeste Masse erhalten.

Die so erhaltene Masse wird nun mit einer Rakel auf Polyethylenfolie in einer Dicke von 2 mm aufgetragen und bei 23°C und 50 % rel. Luftfeuchtigkeit vernetzen gelassen. Die Hautbildungszeit beträgt 20 Minuten.

## Patentansprüche

1. Verfahren zur Herstellung vernetzbarer Massen, **dadurch gekennzeichnet, dass** in einem ersten Schritt
α,ω-dihydroxyterminierte organische Polymere der Formel
OH-A-OH (II)
mit Isocyanato-funktionellen Silanen der Formel
R²₃₋ₙ(OR¹)ₙSi-R-NCO (III)
in Anwesenheit von Katalysatoren, ausgewählt aus der Gruppe bestehend aus Bismuth- und Zinkverbindungen, zu organyloxysilylterminierten Polymeren umgesetzt werden,
wobei
R zweiwertige, gegebenenfalls substituierte Kohlenwasserstoffreste mit 1 bis 12 Kohlenstoffatomen bedeutet, die mit Heteroatomen unterbrochen sein können,
R¹ gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet,
R² gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet,
A einen zweiwertigen, gegebenenfalls substituierten Kohlenwasserstoffrest mit mindestens 6 Kohlenstoffatomen bedeutet, der mit Heteroatomen unterbrochen sein kann, und
n gleich 1, 2 oder 3 ist,
und in einem zweiten Schritt
die im ersten Schritt erhaltenen Polymere (A) mit Silan-Kondensationskatalysator (B) ausgewählt aus der Gruppe bestehend aus Dibutylzinndilaurat, Dibutylzinndiacetat, Tetrabutyldimethoxydistannoxan, Lösungen von Dibutylzinnoxid in Methyltrimethoxysilan oder Tetraethoxysilan, Dioctylzinndilaurat, Dioctylzinndiacetat, Tetraoctyldimethoxydistannoxan, Lösungen von Dioctylzinnoxid in Methyltrimethoxysilan oder Tetraethoxysilan, Dibutylzinn-bis(2,4-pentandionat), Dibutylzinnmaleat, Aminopropyltrimethoxysilan und Aminoethylaminopropyltrimethoxysilan sowie saure Katalysatoren, wie organische Carbonsäuren, Phosphorsäuren bzw. Phosphorsäuerester, Säurechloride oder Hydrochloride, sowie gegebenenfalls weiteren Stoffen (C) vermischt werden.

2. Verfahren nach Anspruch 1, **dadurch gekennzeichnet, dass** es sich bei den organischen Polymeren der Formel (II) um Polymerzubereitungen, die auf Polyethern basieren, handelt.

3. Verfahren nach Anspruch 1 oder 2, **dadurch gekennzeichnet, dass** n in Formel (III) den Wert 2 oder 3 hat.

4. Verfahren nach einem oder mehreren der Ansprüche 1 bis 3, **dadurch gekennzeichnet, dass** es sich bei dem eingesetzten Katalysator um Carboxylate des Bismuths und Zinks handelt.

5. Verfahren gemäß einem oder mehreren der Ansprüche 1 bis 4, **dadurch gekennzeichnet, dass** Silan-Katalysator (B) in Mengen von 0,01 bis 3,0 Gewichtsteilen, bezogen auf 100 Gewichtsteile Polymer (A) eingesetzt wird.

6. Verfahren gemäß einem oder mehreren der Ansprüche 1 bis 5, **dadurch gekennzeichnet, dass** es sich bei den gegebenenfalls eingesetzten weiteren Stoffen (C) um Füllstoffe, Additive, Vernetzer und Weichmacher handeln kann.

7. Verfahren gemäß einem oder mehreren der Ansprüche 1 bis 6, **dadurch gekennzeichnet, dass** der zweite Schritt bei Temperaturen von 10 bis 100°C und einem Druck der umgebenden Atmosphäre, also etwa 900 bis 1100 hPa, durchgeführt wird.

## Claims

1. Process for preparing crosslinkable compositions, **characterized in that** it comprises, in a first step, converting α,ω-dihydroxy-terminated organic polymers of the formula
OH-A-OH (II)
with isocyanato-functional silanes of the formula
R²₃₋ₙ(OR¹)ₙSi-R-NCO (III)
in the presence of catalysts selected from the group consisting of bismuth and zinc compounds to give organyloxysilyl-terminated polymers
where
R are each divalent, optionally substituted hydrocarbon radicals having from 1 to 12 carbon atoms which may be interrupted by heteroatoms,
R¹ may be the same or different and may each be monovalent, optionally substituted hydrocarbon radicals having from 1 to 12 carbon atoms which may be interrupted by heteroatoms,
R² may be the same or different and may each be monovalent, optionally substituted hydrocarbon radicals having from 1 to 12 carbon atoms which may be interrupted by heteroatoms,
A is a divalent, optionally substituted hydrocarbon radical having at least 6 carbon atoms which may be interrupted by heteroatoms, and
n is 1, 2 or 3,
and in a second step,
mixing the polymers (A) obtained in the first step with silane condensation catalyst (B) selected from the group consisting of dibutyltin dilaurate, dibutyltin diacetate, tetrabutyldimethoxydistannoxane, solutions of dibutyltin oxide in methyltrimethoxysilane or tetraethoxysilane, dioctyltin dilaurate, dioctyltin diacetate, tetraoctyldimethoxydistannoxane, solutions of dioctyltin oxide in methyltrimethoxysilane or tetraethoxysilane, dibutyltin bis(2,4-pentanedionate), dibutyltin maleate, aminopropyltrimethoxysilane and aminoethylaminopropyltrimethoxysilane, and also acidic catalysts such as organic carboxylic acids, phosphoric acids or phosphoric esters, acid chlorides or hydrochlorides, and also, if appropriate, further substances (C).

2. Process according to Claim 1, **characterized in that** the organic polymers of the formula (II) are polymer formulations which are based on polyethers.

3. Process according to Claim 1 or 2, **characterized in that** n in formula (III) has the value 2 or 3.

4. Process according to one or more of Claims 1 to 3, **characterized in that** the catalyst used comprises carboxylates of bismuth and zinc.

5. Process according to one or more of Claims 1 to 4, **characterized in that** silane catalyst (B) is used in amounts of from 0.01 to 3.0 parts by weight, based on 100 parts by weight of polymer (A).

6. Process according to one or more of Claims 1 to 5, **characterized in that** the further substances (C) used if appropriate may be fillers, additives, crosslinkers and plasticizers.

7. Process according to one or more of Claims 1 to 6, **characterized in that** the second step is carried out at temperatures of from 10 to 100°C and at a pressure of the surrounding atmosphere, i.e. from about 900 to 1100 hPa.

## Revendications

1. Procédé de préparation de masses réticulables, **caractérisé en ce que**, dans une première étape,
on fait réagir des polymères organiques à terminaison α,ω-dihydroxy de la formule
OH-A-OH (II)
avec des silanes à fonctionnalité isocyanato de la formule
R²₃₋ₙ(OR¹)ₙSi -R-NCO (III)
en présence de catalyseurs choisis dans le groupe formé par des composés de bismuth et de zinc, pour former des polymères à terminaison organyloxysilyle,
où
R peuvent être des radicaux hydrocarbonés bivalents, le cas échéant substitués et comportant de 1 à 12 atomes de carbone, qui peuvent être interrompus par des hétéroatomes,
R¹ peuvent être identiques ou différents et représentent des radicaux hydrocarbonés monovalents, le cas échéant substitués et comportant de 1 à 12 atomes de carbone, qui peuvent être interrompus par des hétéroatomes,
R² peuvent être identiques ou différents et représentent des radicaux hydrocarbonés monovalents comportant de 1 à 12 atomes de carbone, le cas échéant substitués, et qui peuvent être interrompus par des hétéroatomes,
A représente un radical hydrocarboné bivalent, le cas échéant substitué et comportant au moins 6 atomes de carbone, qui peut être interrompu par des hétéroatomes, et
n vaut 1, 2 ou 3,
et dans une deuxième étape,
on mélange les polymères (A) obtenus à la première étape avec un catalyseur de condensation au silane (B), choisi dans le groupe formé par du dilaurate de dibutylétain, du diacétate de dibutylétain, du tétrabutyldiméthoxy-distannoxane, des solutions d'oxyde de dibutylétain dans du méthyltriméthoxysilane ou du tétraéthoxysilane, du dilaurate de dioctylétain, du diacétate de dioctylétain, du tétraoctyldiméthoxydistannoxane, des solutions d'oxyde de dioctylétain dans du méthyltriméthoxysilane ou du tétraéthoxysilane, du bis(2,4-pentanedionate) de dibutylétain, du maléate de dibutylétain, de l'aminopropyltriméthoxysilane et de l'aminoéthyl-aminopropyltriméthoxysilane ainsi que des catalyseurs acides, comme des acides carboxyliques organiques, des acides phosphoriques ou selon le cas des esters d'acide phosphorique, des chlorures d'acides ou des chlorhydrates, ainsi que le cas échéant d'autres substances (C).

2. Procédé suivant la revendication 1, **caractérisé en ce que** les polymères organiques de la formule (II) sont des préparations polymères à base de polyéthers.

3. Procédé suivant la revendication 1 ou 2, **caractérisé en ce que**, dans la formule (III) n vaut 2 ou 3.

4. Procédé suivant une ou plusieurs des revendications 1 à 3, **caractérisé en ce que** le catalyseur mis en oeuvre est un carboxylate de bismuth et de zinc.

5. Procédé suivant une ou plusieurs des revendications 1 à 4, **caractérisé en ce que** l'on met en oeuvre un catalyseur au silane (B) en des quantités de 0,01 à 3,0 parties en poids, par rapport à 100 parties en poids de polymère (A).

6. Procédé suivant une ou plusieurs des revendications 1 à 5, **caractérisé en ce que** les autres substances (C) mises en oeuvre le cas échéant peuvent être des charges, des additifs, des agents de réticulation et des plastifiants.

7. Procédé suivant une ou plusieurs des revendications 1 à 6, **caractérisé en ce que** la deuxième étape est entreprise à des températures de 10 à 100°C, et une pression de l'atmosphère ambiante, à savoir d'environ 900 à 1100 hPa.
